Europäisches Patentamt

European Patent Office

Office européen des brevets

(19)

(11) Numéro de publication : **0 074 882**
**B1**

# (12) FASCICULE DE BREVET EUROPÉEN

(45) Date de publication du fascicule du brevet :
**06.05.87**

(21) Numéro de dépôt : **82401618.2**

(22) Date de dépôt : **02.09.82**

(51) Int. Cl.⁴ : **B 25 J 17/02**

(54) **Poignet orientable à trois axes de rotation pour robot industriel.**

(30) Priorité : **15.09.81 FR 8117426**

(43) Date de publication de la demande :
**23.03.83 Bulletin 83/12**

(45) Mention de la délivrance du brevet :
**06.05.87 Bulletin 87/19**

(84) Etats contractants désignés :
**DE FR GB IT SE**

(56) Documents cités :
**EP-A- 0 044 548**
**DE-A- 2 228 598**
**DE-A- 2 754 609**
**FR-A- 2 310 842**
**FR-A- 2 315 629**
**US-A- 3 381 485**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Passemard, Jean-Robert**
**11, rue de Magny**
**F-77400 Bailly Romainvilliers (FR)**
Inventeur : **Keledjian, Gaston**
**19, rue Jules Ferry**
**F-92100 Boulogne Billancourt (FR)**

EP 0 074 882 B1

## Description

La présente invention a pour objet un poignet orientable comportant trois axes de rotation et destiné à être monté à l'extrémité d'un bras de robot industriel à commande électrique.

Les robots industriels utilisés pour répondre aux besoins d'automatisation des outils de production et en particulier de production en série, peuvent comporter selon leur configuration, un bras ou une unité de translation comprenant un chariot mobile. L'extrémité du bras ou du chariot est munie d'un module orientable ou poignet à trois axes de rotation. Le poignet peut être équipé d'outils divers permettant d'automatiser un grand nombre d'opérations de fabrication ou de transfert telles que le soudage, la découpe de pièces, la manutention, etc.

On connaît par le brevet DE-A-2 754 609, un poignet à trois axes dont les pivots motorisés comportent des moteurs qui agissent par des engrenages, sans aucune réduction.

La demande a pour but de réaliser un poignet pour robot électrique à trois axes de rotation comportant une pluralité de réducteurs encombrants et dont l'architecture permet de loger ces réducteurs sans créer un encombrement important et sans réduire la taille des moteurs qui n'auraient pas alors un couple suffisant. La disposition à l'intérieur même du poignet de trois motoréducteurs indépendants permet d'obtenir un poignet parfaitement interchangeable susceptible d'être monté sur tout type de robot, qu'il soit de structure horizontale, verticale ou en portique.

Ce poignet constitue un ensemble extrêmement compact, notamment dans le sens longitudinal par rapport au bras de support, malgré les contraintes résultant de l'utilisation de trois motoréducteurs indépendants disposés dans la structure même du poignet orientable de façon à assurer comme il a été dit précédemment, le caractère interchangeable de l'ensemble.

Ce poignet permet, en utilisant pour chaque axe un premier étage de réduction à engrenages et un deuxième étage de réduction constitué d'un réducteur différentiel à transmission coaxiale connu sous la dénomination « Harmonic Drive », d'associer les avantages de ces réducteurs différentiels avec la nécessité du décalage des axes de sortie des différents moteurs par rapport aux axes de rotation du poignet.

Conformément à l'invention, le poignet orientable comprend un élément de fixation sur l'extrémité du bras de robot recevant un premier moteur électrique associé à un dispositif de codage et entraînant des pignons, l'axe dudit moteur étant parallèle et non coïncidant à un premier axe de rotation, un élément intermédiaire entraîné en rotation autour du premier axe de rotation par ledit premier moteur et les pignons associés et recevant un deuxième moteur électrique associé à un dispositif de codage et entraînant des pignons, l'axe dudit moteur étant parallèle à un second axe de rotation, un élément d'extrémité muni d'un support d'outil entraîné en rotation autour du second axe de rotation par ledit deuxième moteur et les pignons associés et recevant un troisième moteur électrique entraînant ledit support d'outil en rotation autour du troisième axe de rotation et il est caractérisé par le fait que chaque jeu de pignons est couplé à un réducteur monté selon l'axe de rotation correspondant.

Selon une caractéristique le troisième moteur est disposé transversalement dans le prolongement du réducteur couplé au second moteur et entraîne le réducteur disposé selon le troisième axe de rotation par l'intermédiaire d'un jeu de pignons.

Selon une autre caractéristique préférée, trois détecteurs d'initialisation sont montés de façon à coopérer avec l'organe de sortie de chaque réducteur.

Selon une autre caractéristique préférée, chaque jeu de pignons constitue un étage de réduction.

L'invention sera mieux comprise à l'étude de la description détaillée d'un mode de réalisation particulier faite à titre d'exemple nullement limitatif et illustré par les dessins annexés sur lesquels :

la figure 1 est une vue schématique partiellement en coupe d'un poignet orientable à trois axes de rotation selon la présente invention ; et

la figure 2 est une vue de dessus partiellement en coupe du poignet de la figure 1.

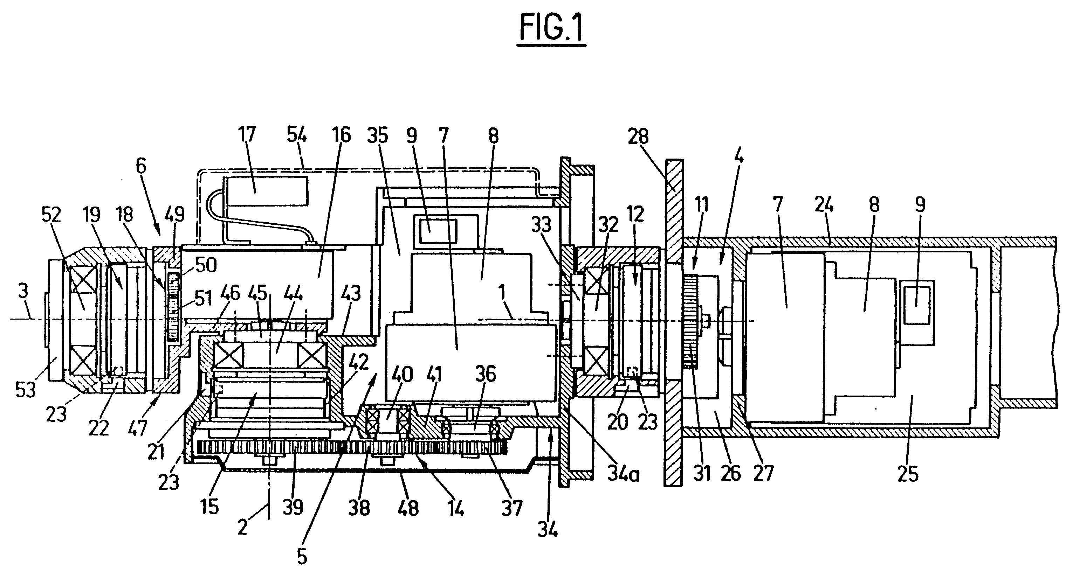

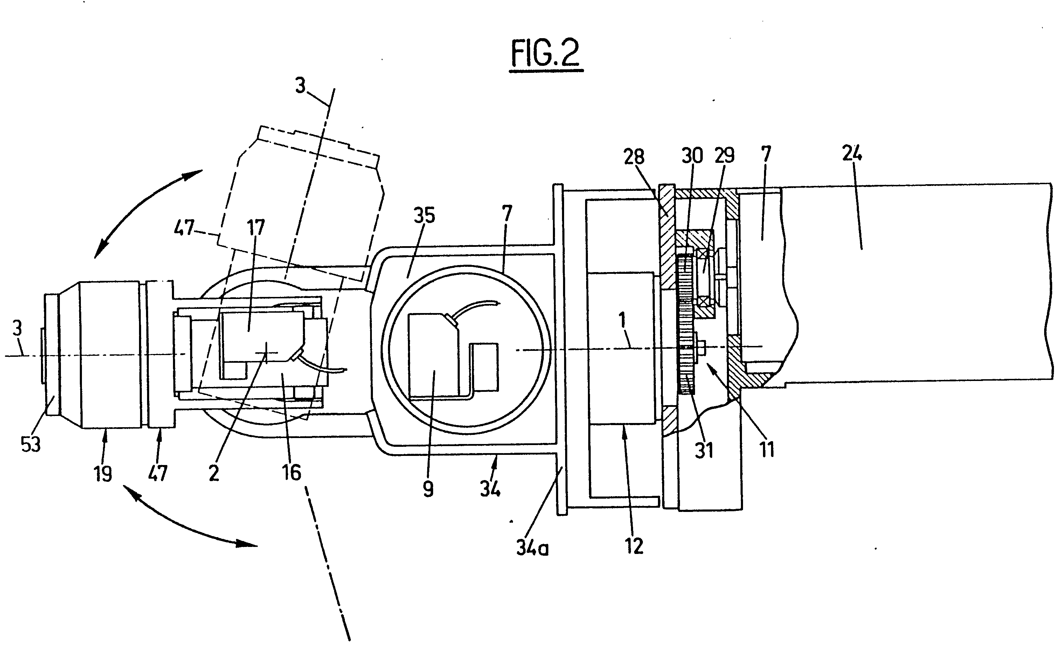

Tel qu'il est représenté sur les figures, le poignet orientable de l'invention comprend un premier axe de rotation 1, un deuxième axe de rotation 2 et un troisième axe de rotation 3 qui constituent les trois axes permettant de définir les différents mouvements désirés lors du fonctionnement du robot industriel équipé dudit poignet. Dans la position représentée en trait plein sur les figures 1 et 2, les trois axes 1, 2 et 3 sont contenus dans un même plan qui est celui de la figure 1, les axes 1 et 3 étant alignés. Dans la position illustrée en tirets sur la figure 2, les trois axes sont concourants deux à deux. En effet, les axes 1 et 2 d'une part, 2 et 3 d'autre part, sont concourants comme on peut le voir sur la figure 2. Il en est de même des axes 1 et 3.

Les mouvements de rotation autour de chacun de ces trois axes 1, 2 et 3 sont engendrés par trois ensembles motoréducteurs référencés respectivement 4, 5 et 6. Le premier ensemble motoréducteur 4 engendrant un mouvement de rotation autour de l'axe 1, comprend un moteur électrique 7 de faible encombrement axial, associé à un dispositif codeur 8 et alimenté en courant continu par un connecteur multibroche 9. Le moteur électrique 7 est avantageusement un moteur à courant continu à aimant permanent présentant un très faible encombrement et de bonnes caractéristiques de couple en fonction de la vitesse de rotation. L'ensemble motoréducteur 4 se complète par un dispositif réducteur comprenant un premier étage de réduction 11 et un deuxième étage de réduction 12.

Le deuxième ensemble motoréducteur 5 comprend les mêmes éléments que le premier ensemble motoréducteur 4. On trouve en effet le même moteur électrique 7 associé à son codeur 8 et recevant un courant électrique d'alimentation par le connecteur 9. Le dispositif de réduction associé, comprend un premier étage de réduction 14 et un deuxième étage 15 de même structure que le deuxième étage 12 précédent.

Le troisième ensemble motoréducteur 6 comprend un moteur électrique à courant continu à aimant permanent 16 muni d'un dispositif de codage intégré et alimenté en courant continu par le connecteur 17. Le dispositif de réduction associé comprend comme précédemment, un premier étage 18 associé à un deuxième étage 19.

L'axe de sortie du moteur de chaque ensemble motoréducteur est parallèle à l'axe du dispositif réducteur correspondant, lequel se trouve monté suivant l'axe de rotation du mouvement obtenu.

De plus, le moteur du deuxième ensemble motoréducteur est de préférence décalé par rapport à l'axe de son dispositif réducteur qui se trouve disposé selon le deuxième axe de rotation. Le moteur du troisième ensemble motoréducteur est disposé transversalement dans le prolongement du dispositif réducteur qui fait partie du deuxième ensemble motoréducteur.

Chaque ensemble motoréducteur comprend en outre un détecteur d'initialisation permettant de connaître l'état de chaque mouvement de rotation en début de cycle. On voit sur la figure 1 les détecteurs d'initialisation 20, 21 et 22 qui coopèrent chaque fois avec un aimant 23 solidaire de l'arbre de sortie du deuxième étage de réduction 12, 15 et 19 de chaque ensemble motoréducteur respectif 4, 5 et 6.

Dans ces conditions il apparaît que le poignet orientable à trois axes de rotation 1, 2 et 3 selon l'invention, à commande électrique, utilise pour chaque mouvement de rotation autour des différents axes, un ensemble de commande indépendant comprenant chaque fois un moteur électrique monté dans le poignet lui-même.

Chaque dispositif de réduction comprend de préférence un premier étage de réduction constitué par un train d'engrenages à axes parallèles suivi d'un deuxième étage de réduction à transmission coaxiale monté cette fois dans l'axe de rotation du mouvement obtenu par l'ensemble motoréducteur considéré.

Le poignet de l'invention comprend un carter ou élément de fixation 24 qui peut être rendu solidaire de l'extrémité d'un bras de robot industriel non représenté sur les figures. Cet élément de fixation de forme générale cylindrique présente un premier logement 25 à l'intérieur duquel se trouve monté le moteur électrique 7, son dispositif de codage 8 et le connecteur d'alimentation 9.

L'élément 24 comporte également un deuxième logement 26 délimité d'une part par une paroi 27 permettant la fixation du moteur 7 et d'autre part par une plaque de fermeture 28 servant de support aux deux étages 11 et 12 du dispositif de réduction, recevant le couple de sortie du moteur 7 transmis par l'arbre de sortie 29 (figure 2). Comme on peut le remarquer sur la figure 2, le pignon 30 solidaire de l'arbre de sortie 29 engrène avec le pignon mené 31 constituant l'entrée du deuxième étage de réduction 12 et monté comme on peut le voir sur la figure 2, selon le premier axe de rotation 1.

L'arbre de sortie 32 du deuxième étage de réduction 12 est rendu solidaire par la bride 33 d'un carter ou élément intermédiaire 34. Cette fixation se fait par une portion en forme de disque 34a coaxiale avec le premier axe de rotation 1. Dans ces conditions, le mouvement de rotation autour de l'axe 1, engendré par le moteur électrique 7 et transmis par les deux étages de réduction 11 et 12 se traduit par la rotation de l'élément de carter intermédiaire 34 autour de l'axe 1.

L'élément intermédiaire 34 comprend un premier logement 35 qui reçoit le deuxième moteur 7, son codeur 8 et son connecteur 9. L'arbre de sortie 36 porte un pignon de sortie 37 coopérant avec un pignon intermédiaire 38 dont l'axe 40 est parallèle à l'arbre de sortie 36. Le pignon intermédiaire 38 engrène avec le pignon mené 39 constituant l'entrée du deuxième étage de réduction 15.

L'arbre de sortie 36 ainsi que l'arbre 40 du pignon intermédiaire 38 et l'arbre d'entrée du deuxième étage de réduction 15 sont montés sur une paroi 41 de l'élément intermédiaire 34. Le deuxième étage de réduction 15 est monté quant à lui dans un deuxième logement 42 de l'élément intermédiaire 34 délimité par une face plane 43. Comme on peut le voir sur la figure 1, les deux étages de réduction du deuxième ensemble motoréducteur 5, se trouvent totalement disposés d'un côté du premier axe de rotation 1. Au contraire le moteur 7, son codeur 8 et la broche d'alimentation 9 de l'ensemble 5 occupent tout le logement 35 de chaque côté de l'axe de rotation 1.

Le moteur 7 du deuxième ensemble motoréducteur 5 entraîne en rotation l'arbre de sortie 44 de l'étage de réduction 15, lequel est solidaire de la bride d'entraînement 45. La bride 45 est fixée sur une face 46 d'un élément de carter d'extrémité 47.

Dans ces conditions, la commande du moteur 7 du deuxième ensemble motoréducteur 5, entraîne la rotation de l'élément d'extrémité 47 autour du deuxième axe 2. Le débattement maximal de ce mouvement angulaire dans l'un des sens, est représenté en tirets sur la figure 2. Les différents pignons 37, 38 et 39 sont protégés par un capot de fermeture 48 disposé sensiblement parallèlement à la paroi 41.

Le moteur 16 du troisième ensemble de motoréducteur 6 est monté sur une portion 49 en forme de disque coaxiale au troisième axe de rotation 3 et faisant partie de l'élément d'extrémité 47. Le pignon de sortie 50 du moteur 16 attaque le pignon d'entrée 51 du deuxième étage de réduction 19. Le pignon 51 est coaxial au troisième axe de rotation 3 de même que le deuxième étage de réduction 19. L'arbre de sortie 52 du deuxième étage de réduction 19 est solidaire d'une bride 53 jouant le rôle de support d'outil pour un outil non représenté sur les figures.

L'entraînement du moteur 16 provoque donc une rotation autour du troisième axe 3 du support d'outil 53 et de l'outil qui s'y trouve fixé.

Un capot de fermeture 54 fixé sur l'élément intermédiaire 34 protège le connecteur 17 du moteur 16.

Comme on peut le voir sur la figure 1, le moteur 16 se trouve monté au-dessus et à l'extérieur de la paroi 43 dans l'emplacement laissé libre au-dessus de l'axe de rotation 1 par le logement 42 de l'élément de carter intermédiaire 34. La structure du moteur électrique 16 est telle qu'il présente une forme relativement allongée et de faible diamètre ce qui permet effectivement de loger ledit moteur 16 dans cet emplacement libre. La portion de l'élément d'extrémité 47 qui reçoit le moteur 16 se trouve donc, par rapport à l'axe de rotation 1 de l'autre côté du logement 42 recevant le deuxième étage de réduction 15. Cette disposition est rendue possible notamment par le fait que l'arbre de sortie 36 du moteur 7 de l'ensemble 5 est disposé de manière décalée et parallèle par rapport à l'axe de rotation 2 compte tenu de l'existence du premier étage de réduction 14 constitué par les trois pignons 37, 38 et 39. De même le décalage entre l'arbre de rotation du premier moteur 7 et le premier axe de rotation 1 ainsi que le décalage entre l'arbre de sortie du moteur 16 et le troisième axe de rotation 3, permettent de disposer ces différents moteurs à l'intérieur des logements des différents éléments de carter 24, 34, 47 tout en augmentant la compacité du poignet dans toutes les dimensions.

On notera en outre, que dans l'exemple de réalisation illustré, les moteurs d'entraînement 7 des axes de rotation 1 et 2 sont identiques ainsi que leur codeur 8 et leur connecteur multibroche 9 ce qui simplifie naturellement la maintenance de l'ensemble et diminue les coûts de fabrication en augmentant la standardisation. Il en est de même des trois étages de réduction à transmission coaxiale 12, 15 et 19. On notera que ces réducteurs différentiels qui ont été représentés en vue extérieure sur les figures, sont du type connu et commercialisé sous la dénomination « Harmonic Drive ».

Il s'agit donc de réducteurs présentant un très grand rapport de réduction pour un faible poids et un volume réduit, un rendement élevé et un faible jeu angulaire. De plus ces réducteurs permettent de transmettre des couples de rotation élevés.

Ces réducteurs de type « Harmonic Drive » comprennent un générateur de déformations qui n'est rien d'autre qu'un roulement elliptique constitué d'une bague intérieure elliptique, d'une cage à billes et d'une bague extérieure flexible. La bague extérieure flexible est munie d'une couronne dentée à denture extérieure et elle subit les déformations engendrées par la rotation du roulement elliptique. Une couronne dentée intérieurement, rigide, possédant une denture dont les caractéristiques sont les mêmes que celles de la couronne dentée extérieure flexible et dont le nombre de dents est supérieur, généralement de deux dents, engrène sur une portion de la denture extérieure de la couronne dentée flexible, 15 % environ de la denture de ces deux éléments restant toujours en contact. On obtient ainsi des rapports de réduction extrêmement élevés.

Pour assurer la transmission de couple important malgré une exécution de très faibles dimensions selon son axe de rotation, on peut adjoindre à ces réducteurs, une deuxième couronne dentée intérieurement, rigide, possédant une denture de même caractéristique que la denture de la bague extérieure flexible et le même nombre de dents. On peut également disposer un deuxième roulement elliptique augmentant ainsi les capacités de charge de l'ensemble.

Les trois détecteurs d'initialisation 20, 21 et 22 sont identiques et sont montés de façon à coopérer directement avec l'organe de sortie du deuxième étage de réduction considéré. On obtient donc une information extrêmement précise sur la position angulaire exacte selon chacun des trois axes de rotation 1, 2 et 3.

En définitive, on obtient donc un poignet orientable à trois axes ou à trois degrés de liberté, facilement interchangeable, très compact d'un prix de revient réduit et d'une grande précision de commande des mouvements de rotation.

**Revendications**

1. Poignet orientable à trois axes de rotation (1, 2, 3) se montant à l'extrémité d'un bras de robot industriel comprenant un élément (24) de fixation sur l'extrémité du bras, recevant un premier moteur électrique (7) associé à un dispositif de codage (8) et entraînant des pignons (11), l'axe dudit moteur étant parallèle et non-coïncidant à un premier axe de rotation (1), un élément intermédiaire (34) entraîné en rotation autour du premier axe de rotation par ledit premier moteur et les pignons associés recevant un deuxième moteur électrique (7) associé à un dispositif de codage (8) et entraînant des pignons (14) l'axe dudit moteur étant parallèle et non coïncidant à un second axe de rotation (2) ; un élément d'extrémité (47) muni d'un support d'outil (53) entraîné en rotation autour du second axe de rotation par ledit deuxième moteur et les pignons associés et recevant un troisième moteur électrique (16) entraînant ledit support d'outil en rotation autour du troisième axe de rotation (3), caractérisé par le fait que chaque jeu de pignons (11, 14, 18) est couplé à un réducteur (12, 15, 19) monté selon l'axe de rotation correspondant (1 ou 2 ou 3).

2. Produit selon la revendication 1, caractérisé par le fait que le troisième moteur (16) est disposé transversalement dans le prolongement du réducteur (15) couplé au second moteur (7) et entraîne le réducteur (19) disposé selon le troisième axe de rotation (3) par l'intermédiaire d'un jeu de pignons (18).

3. Poignet orientable selon l'une quelconque des revendications précédentes, caractérisé par le fait que trois détecteurs d'initialisation (20, 21, 22) sont montés de façon à coopérer avec l'organe de sortie de chaque réducteur (12, 15, 19).

4. Poignet orientable selon l'une quelconque des revendications précédentes, caractérisé par le fait que chaque jeu de pignons (11, 14, 18) constitue un étage de réduction.

5. Poignet orientable selon la revendication 4, caractérisé par le fait que chacun des réducteurs (12, 15, 19) monté selon l'axe de rotation est du type comprenant au moins un roulement elliptique constitué d'une bague intérieure elliptique, d'une cage à billes et d'une bague extérieure flexible, une denture étant pratiquée sur la bague extérieure flexible précitée, et une première couronne dentée intérieure rigide possédant une denture de mêmes caractéristiques que la denture de la bague extérieure flexible mais un nombre de dents supérieur.

6. Poignet orientable selon la revendication 5, caractérisé par le fait que chacun des deuxième étages de réduction (12, 15, 19) comprend en outre une deuxième couronne dentée intérieurement, rigide, possédant une denture de mêmes caractéristiques que la denture de la bague extérieure flexible et le même nombre de dents.

## Claims

1. An orientable wrist joint having three axes of rotation (1, 2, 3), which is mounted at the end of an industrial robot arm, comprising an element (24) for fixing to the end of the arm, accomodating a first electric motor (7) associated with an encoding means (8) and driving pinions (11), the axis of said motor being parallel to and non-coincident with a first axis of rotation (1), an intermediate element (34) which is driven in rotation about said first axis of rotation by said first motor and the associated pinions and which accommodates a second electric motor (7) associated with an encoding means (8) and driving pinions (14), the axis of said motor being parallel to and non-coincident with a second axis of rotation (2); an end element (47) provided with a tool carrier (53) and driven in rotation about said second axis of rotation by said second motor and the associated pinions and accommodating a thrid electric motor (16) for driving said tool carrier in rotation about the third axis of rotation (3), characterised in that each set of pinions (11, 14, 18) is coupled to a reducing means (12, 15, 19) mounted on the corresponding axis of rotation 1 or 2 or 3).

2. A wrist joint according to claim 1 characterised in that the third motor (16) is disposed transversely in alignment with the reducing means (15) coupled to the second motor (7) and drives the reducing means (19) disposed on the third axis of rotation (3) by way of a set of pinions (18).

3. An orientable wrist joint according to either one of the preceding claims characterised in that three initialisation detectors (20, 21, 22) are so mounted as to co-operate with the output member of each reducing means (12, 15, 19).

4. An orientable wrist joint according to any one of the preceding claims characterised in that each set of pinions (11, 14, 18) constitutes a reduction stage.

5. An orientable wrist joint according to claim 4 characterised in that each of the reducing means (12, 15, 19) which is mounted on the axis of rotation is of the type comprising at least one elliptical rolling bearing formed by an elliptical inner race, a ball cage and a flexible outer race, a tooth arrangement being provided on said flexible outer race, and a first rigid inner toothed ring having a tooth arrangement of the same characteristics as the tooth arrangement of the flexible outer race but a larger number of teeth.

6. An orientable wrist joint according to claim 5 characterised in that each of the second reduction stages (12, 15, 19) further comprises a second rigid internally toothed ring having a tooth arrangement of the same characteristics as the tooth arrangement of the flexible outer race and the same number of teeth.

## Patentansprüche

1. Orientierbares Handgelenk mit drei Rotationsachsen (1, 2, 3) zur Anordnung am Armende eines Industrieroboters mit einem Teil (24) zur Befestigung am Armende, das einen ersten Elektromotor (7) aufnimmt, der einer Kodieranordnung (8) zugeordnet ist und der Ritzel (11) antreibt, wobei die Achse des Motors parallel aber nicht zusammenfallend mit einer ersten Rotationsachse (1) ist, wobei ein Zwischenstück (34), das vom ersten Motor um die erste Rotationsachse verdrehbar ist sowie die zugehörigen Ritzel einen zweiten Elektromotor (7) aufnehmen, der einer Kodieranordnung (8) zugeordnet ist und Ritzel (14) antreibt, wobei die Achse des Motors parallel, aber nicht zusammenfallend mit einer zweiten Rotationsachse (2) ist ; ein Endstück (47), das mit einer Werkzeughalterung (53) versehen ist und das vom zweiten Motor um die zweite Rotationsachse verdrehbar ist sowie die zugehörigen Ritzel nehmen einen dritten Elektromotor (16) auf, der die Werkzeughalterung um die dritte Rotationsachse (3) verdreht, dadurch gekennzeichnet, daß jeder Ritzelsatz (11, 14, 18) mit einem Untersetzungsgetriebe (12, 15, 19) gekuppelt ist, das entlang der entsprechenden Rotationsachse (1 oder 2 oder 3) angeordnet ist.

2. Handgelenk nach Anspruch 1, dadurch gekennzeichnet, daß der dritte Motor (16) quer in der Verlängerung des mit dem zweiten Motor (7) gekoppelten Untersetzungsgetriebs (15) angeordnet ist und das Untersetzungsgetriebe (19) antreibt, entlang der dritten Rotationsachse (3) mittels eines Ritzelsatzes (18).

3. Orientierbares Handgelenk nach einem der vorhergehenden Ansprüche, dadurch gekennzeichnet, daß drei Auslösefühler (20, 21, 22) derart angeordnet sind, daß sie mit dem Ausgangsteil eines jeden Untersetzungsgetriebes (12, 15, 19) zusammenwirken.

4. Orientierbares Handgelenk nach einem der vorhergehenden Ansprüche, dadurch gekennzeichnet, daß jeder Ritzelsatz (11, 14, 18) eine Untersetzungsstufe bildet.

5. Orientierbares Handgelenk nach Anspruch 4, dadurch gekennzeichnet, daß jedes Untersetzungsgetriebe (12, 15, 19) das entlang der Rotationsachse angeordnet ist, von der Art ist, daß es wenigstens ein elliptisches Rollenlager aufweist, das aus einem inneren elliptischen Ring besteht, einem Kugelgehäuse und einem äußeren flexiblen Ring, wobei der äußere flexible Ring mit einer Zahnung versehen ist und ein erster steifer innerer Zahnkranz eine Zahnung der gleichen Eigenschaften aufweist wie die Zahnung des flexiblen äußeren Ringes, jedoch mit einer größeren Anzahl von Zähnen.

6. Orientierbares Handgelenk nach Anspruch 5, dadurch gekennzeichnet, daß jede der zweiten Untersetzungsstufen (12, 15, 19) außerdem einen zweiten steifen Zahnkranz mit Innenzahnung aufweist, mit einer Zahnung der gleichen Eigenschaften wie die Zahnung des flexiblen äußeren Rings und mit gleicher Zahnanzahl.

# FIG.1

0 074 882

FIG.2